(19) Europäisches Patentamt
European Patent Office
Office européen des brevets

(11) **EP 3 070 381 B1**

(12) **EUROPÄISCHE PATENTSCHRIFT**

(45) Veröffentlichungstag und Bekanntmachung des Hinweises auf die Patenterteilung:
**03.04.2019  Patentblatt 2019/14**

(51) Int Cl.:
***F16K 7/14*** *(2006.01)*

(21) Anmeldenummer: **16155612.1**

(22) Anmeldetag: **15.02.2016**

(54) **VERSCHLUSSELEMENT FÜR EINE VENTILEINRICHTUNG**

CLOSURE ELEMENT FOR A VALVE DEVICE

ÉLEMENT DE FERMETURE D'UN DISPOSITIF DE SOUPAPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2015  DE 102015205127**

(43) Veröffentlichungstag der Anmeldung:
**21.09.2016  Patentblatt 2016/38**

(73) Patentinhaber: **GEMÜ Gebr. Müller Apparatebau GmbH & Co. Kommanditgesellschaft 74653 Ingelfingen (DE)**

(72) Erfinder:
• **BAUMGÄRTNER, Michael 74677 Dörzbach (DE)**
• **ZUBER, Daniel 74189 Weinsberg (DE)**

(74) Vertreter: **DREISS Patentanwälte PartG mbB Friedrichstraße 6 70174 Stuttgart (DE)**

(56) Entgegenhaltungen:
EP-A1- 1 596 109          WO-A2-01/73327
DE-A1- 3 327 589          DE-U1- 8 709 978
US-A1- 2007 075 284

EP 3 070 381 B1

**EP 3 070 381 B1**

**Beschreibung**

Die Erfindung betrifft ein Verschlusselement für eine Ventileinrichtung nach dem Oberbegriff des Anspruchs 1.

Aus der DE 10 2012 211 926 A1 ist ein Ventil bekannt, bei dem ein erster Faltenbalg in einem ersten Ventilbereich vorgesehen ist, der an einem Ventilstempel und an einem Ventilgehäuse angebracht ist. Ein zweiter Faltenbalg ist in einem zweiten Ventilbereich vorgesehen, der an dem Ventilstempel und an dem Ventilgehäuse angebracht ist.

Aus der DE 10 2013 215 294 ist eine Membrananordnung mit zwei Membranelementen bekannt, wobei die beiden Membranelemente derart aneinander anliegen, dass in dem Anlageabschnitt die Membranelement zueinander bewegbar sind.

Die DE 87 09 978 U1 offenbart ein Auslaufventil für Brühwasser. Die als Rollmembran ausgebildete Trennmembran und der in sie integrierte Ventilteller sind so ausgestaltet, dass die in Öffnungsrichtung nach oben wirksame Wirkungsfläche der Rollmembran kleiner ist als die in Schließrichtung wirksame Wirkungsfläche des Ventiltellers.

DE 33 27 589 A1 offenbart ein Elektromagnetventil. Bei diesem bewirken die vom Mediumsdruck beaufschlagten Flächen am Ventilteller und an der Membran, dass in Abhängigkeit vom Mediumsdruck eine in Schließrichtung wirkende, also die Kraft einer Schraubendruckfeder unterstützende Kraftkomponente entsteht.

EP 1 596 109 A1 offenbart ein Elektromagnetventil für flüssige Medien, insbesondere Heißwasser. Eine Ventilkammer ist gegen ein Magnetsystem durch eine Trennmembran abgedichtet. Die Trennmembran erstreckt sich von ihrem mit dem Gehäuse verbundenen Außenrand auf der Höhe einer Einmündung eines Zulaufkanals in einer gleichförmigen und im gleichen Sinne verlaufenden Abwärtskrümmung zum Ventilschaft hin.

Des Weiteren ist bekannt, dass insbesondere die notwendige Antriebsenergie zum Schließen einer Ventileinrichtung im Dauerbetrieb sehr hoch ist.

Das der Erfindung zu Grunde liegende Problem wird durch ein Verschlusselement nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Dadurch, dass ein Membranabschnitt und ein Zwischenabschnitt des Verschlusselements derart aufeinander abgestimmt sind, so dass ein Druck in einem Zuflussabschnitt das Verschlusselement bei einem Verbleiben in einer Schließposition unterstützt, kann vorteilhaft erreicht werden, dass auch bei hohen Druckunterschieden zwischen dem Zuflussabschnitt und einem Abflussabschnitt nur sehr geringe Antriebskräfte zum Bewegen des Verschlusselements nötig sind. So unterstützt der Druck des Mediums vorteilhaft den Antrieb beim Schließen der Ventileinrichtung. Ebenfalls kann der Bauraum reduziert werden, da kleinere Antriebe zur Bewegung des Verschlusselements verbaut werden können. Auch ist der Durchfluss so besser einstellbar.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es werden für funktionsäquivalente Größen und Merkmale in allen Figuren auch bei unterschiedlichen Ausführungsformen die gleichen Bezugszeichen verwendet.

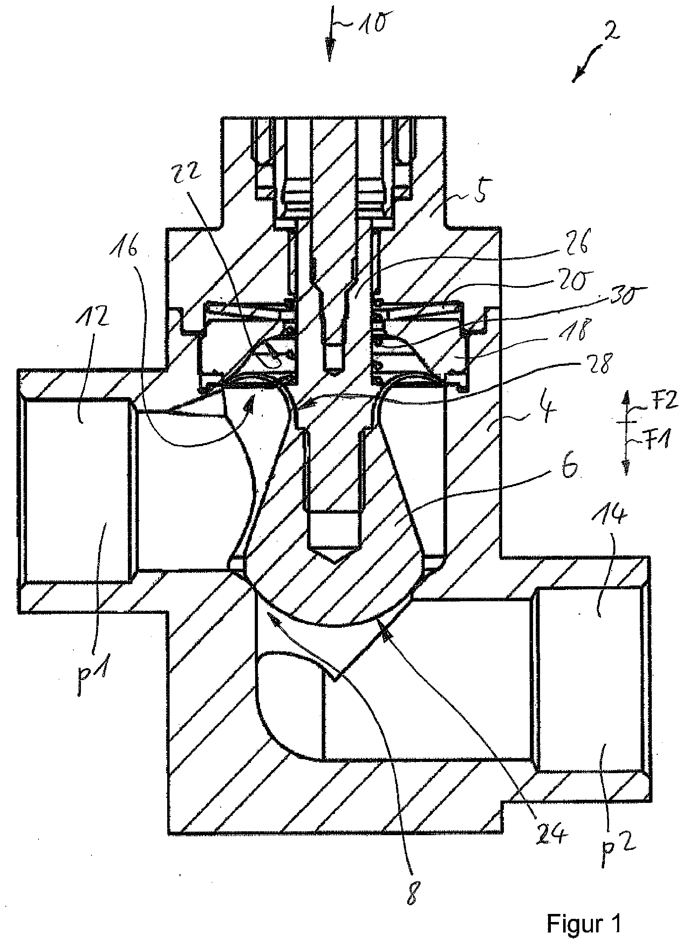

Figur 1 zeigt eine Ventileinrichtung 2 mit einem in einem Ventilkörper 4 angeordneten Verschlusselement 6. Der Ventilkörper 4 ist mit einem Ventildeckel 5 verschlossen. Das Verschlusselement 6 ist in einer Schließposition gezeigt, in der das Verschlusselement 6 in eine Zustellrichtung 10 auf einen Ventilsitz 8 drückt und damit einen Zuflussabschnitt 12 von einem Abflussabschnitt 14 trennt, womit die Ventileinrichtung 2 geschlossen ist. Entgegen der Zustellrichtung 10 ist ein nicht gezeigter Ventilantrieb angeordnet.

Das Verschlusselement 6 weist einen Membranabschnitt 16 auf, der radial nach außen zwischen dem Ventilkörper 4 und einem Befestigungselement 18 aufgenommen ist. Der Membranabschnitt 16 ist im Wesentlichen torusschnittförmig ausgebildet. Eine Tellerfeder 20 drückt auf das Befestigungselement 18 und damit auf einen radial äußeren Befestigungsbereich des Membranabschnitts 16, um zum einen eine Vorspannung des äußeren Befestigungsbereichs bereitzustellen und um zum anderen Toleranzen sowie Längenausdehnungen bei Temperaturänderungen auszugleichen. Des Weiteren umfasst das Befestigungselement 18 einen äußeren Anlagebereich 22, an den der Membranabschnitt 16 zumindest teilweise insbesondere bei einer geöffneten Stellung des Verschlusselements 6 anliegt. In Zustellrichtung 10 umfasst das Verschlusselement 6 einen Schließabschnitt 24, der insbesondere zum Anliegen an den Ventilsitz 8 ausgebildet ist. Entgegen der Zustellrichtung 10 ist das Verschlusselement 6 mit einer Antriebsstange 26 verbunden. Die Antriebsstange 26 stellt einen inneren Anlagebereich 28 bereit, an den der Membranabschnitt 16 zumindest teilweise insbesondere bei einer geschlossenen Stellung des Verschlusselements 6 anliegt.

In dem geschlossenen Zustand der Ventileinrichtung 2 herrscht ein erster Druck p1 in dem Zuflussabschnitt 12, der auf den Ventilkörper wirkt. Ein zweiter Druck p2 herrscht in dem Abflussabschnitt 14.

Eine optionale Druckfeder 30 drückt über die Antriebsstange 26 auf das Verschlusselement 6 und wirkt somit dem zweiten Druck p2, der in der geschlossenen Stellung der Ventileinrichtung 2 über den Schließabschnitt 24 entgegen der Zustellrichtung 10 wirkt, entgegen.

Das Verschlusselement 6 ist derart ausgestaltet, dass eine durch den Druck p1 an dem Verschlusselement 6 angreifende Kraft F1 in Zustellrichtung 10 größer ist als eine durch den Druck p1 an dem Verschlusselement 6 angreifende Kraft F2 entgegen der Zustellrichtung 10. Dies unterstützt ein Verschließen des Ventilsitzes 8 mit geringer auszuwendender Kraft für den Ventilantrieb. Mittels einer Erhöhung einer Federkraft der Druckfeder 30 kann die Ventileinrichtung 2 an einen entsprechend hohen Druck p2 in dem Abflussabschnitt 14 angepasst werden, ohne dass die Geometrie des Verschlusselements 6 angepasst werden muss.

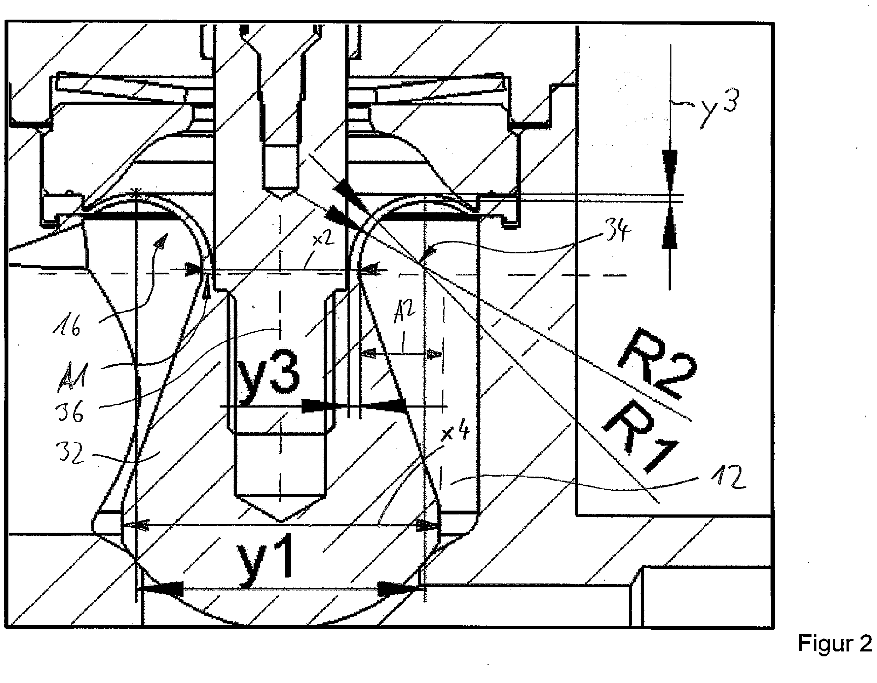

Figur 2 zeigt eine Variante der Ventileinrichtung 2 ohne innere Membranabstützung wie in Figur 1 durch den Anlagebereich 28 gezeigt. Der Membranabschnitt 16 geht in einer lotrecht zur Zustellrichtung 10 orientierten Kreisringschnittfläche A1 mit einer Membrandicke y3 in einen Mittenabschnitt 32 des Verschlusselements 6 über.

Der Membranabschnitt 16 weist zwischen dem Mittenabschnitt 32 und der radial äußeren Befestigung einen äußeren Krümmungsradius R1 und einen inneren Krümmungsradius R2 mit gemeinsamer Ringachse 34 um eine Mittenlängsachse 36 des Verschlusselements 6 auf. Eine Membrandicke y3 ergibt sich aus der Subtraktion des inneren Krümmungsradius R2 von dem äußeren Krümmungsradius R1. Selbstverständlich kann der Membranabschnitt 16 in seinem radialen Verlauf eine sich verändernde Membrandicke aufweisen. Ein mittlerer Krümmungsradius r ergibt sich aus Gleichung 1.

$$r = (R1 + R2) / 2 \qquad\qquad (1)$$

Bei einem Druck p1 in dem Zuflussabschnitt 12 bildet sich in dem Membranabschnitt 16 eine Tangentialspannung St aus, die sich in Anlehnung an die sogenannten Kesselformel nach DIN 2413 nach Gleichung 2 ergibt. Selbstverständlich kann anstatt des mittleren Krümmungsradius r auch einer der Radien R1 oder R2 in Gleichung 2 verwendet werden.

$$St = (p1 * r) / y3 \qquad\qquad (2)$$

Die Tangentialspannung St greift über die Kreisringschnittfläche A1 an dem Zwischenabschnitt 32 entgegen der Zustellrichtung 10 an. Die Kraft F2 entgegen der Zustellrichtung 10 ergibt sich nach Gleichung (3).

$$F2 = St * A1 \qquad\qquad (3)$$

Eine hydraulisch in Zustellrichtung 10 wirksame Kreisringfläche A2 des Mittenabschnitts 32 des Verschlusselements 6 ergibt sich näherungsweise beispielsweise nach Gleichung 4.

$$A2 = PI * ( ( (x5+x4) / 2 )^2 - (x2)^2 ) / 4 \qquad\qquad (4)$$

Mithin ergibt sich die Kraft F1 in Zustellrichtung nach Gleichung (5).

$$F1 = p1 * A2 \qquad\qquad (5)$$

Die Geometrie des Verschlusselements 6 unterstützt das Halten der gezeigten Schließstellung dadurch, dass die in Zustellrichtung 10 wirkende Kraft F1 größer ist als die entgegen der Zustellrichtung 10 wirkende Kraft F2. Mit den Gleichungen 2, 3 und 5 ergeben sich die Ungleichungen 6.1 bis 6.3.

$$p1 * A2 > St * A1 \qquad\qquad (6.1)$$

$$p1 * A2 > ( (p1 * r) / y3 \quad ) * A1 \qquad\qquad (6.2)$$

$$A2 \ / \ A1 \ > \ r \ / \ y3 \qquad\qquad (6.3)$$

Gemäß Ungleichung 6.3 ist ein erstes Verhältnis der hydraulisch in Zustellrichtung 10 wirksamen Fläche A2 zu der hydraulisch entgegen der Zustellrichtung 10 wirksamen Schnittfläche A1 des Membranabschnitts 16 größer als ein zweites Verhältnis des mittleren Krümmungsradius r des Membranabschnitts 16 zu der Wanddicke y3 des Membranabschnitts 16. Hierdurch wird sichergestellt, dass der Druck p1 das Verschließen des Verschlusselement 6 in der Schließposition in Richtung des Ventilsitzes 8 unterstützt.

Der Durchmesser x4 des Zwischenabschnitts 32 ist größer als die Distanz y1 zwischen den am weitesten entgegen der Zustellrichtung 10 orientierten Bereichen des Membranabschnitts 16.

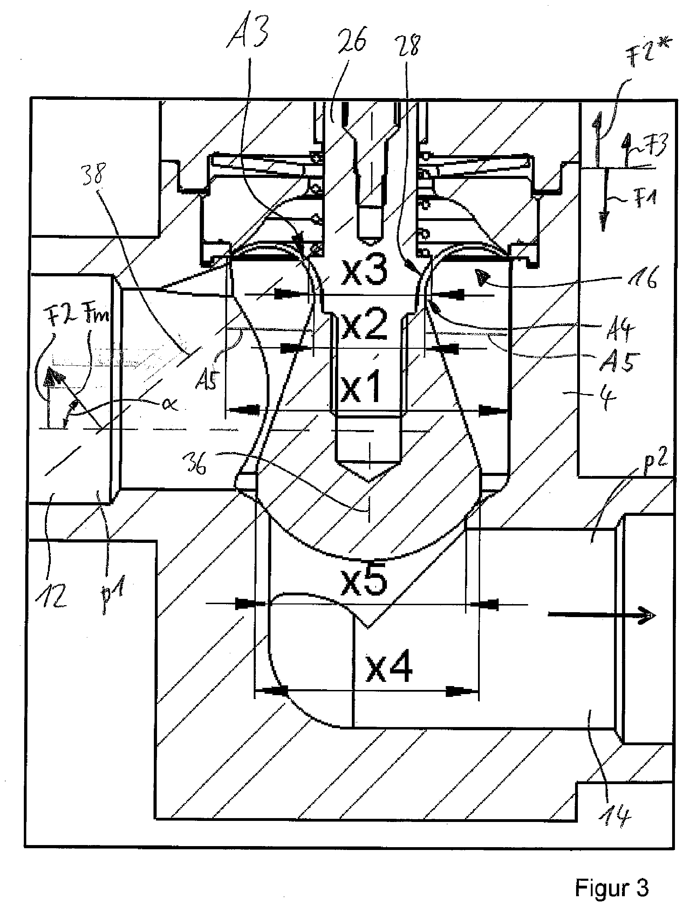

Figur 3 zeigt eine Ausführungsform der Ventileinrichtung 2, in der die Antriebsstange 26 den inneren Anlageabschnitt 28 aufweist. Damit greift die Tangentialspannung St innerhalb des Membranabschnitts 16 in einer Ringschnittfläche A3 an. Die Ringschnittfläche A3 liegt im gezeigten Querschnitt der Figur 3 lotrecht zu einem Verlauf des Membranschnitts 16 in einer Ebene 38, wobei die Ebene 38 an das entgegen der Zustellrichtung 10 orientierten Ende des inneren Anlageabschnitts 28 angrenzt.

Eine durch die Tangentialspannung St in dem Membranabschnitt an der Ringschnittfläche A3 erzeugte Kraft Fm lässt sich mittels eines Einleitungswinkels $\alpha$ gemäß Gleichung 7 in eine Kraft F2* entgegen der Zustellrichtung 10 umrechnen. Der Einleitungswinkels $\alpha$ ist zwischen einer Tangentialen gemäß dem Verlauf des Membranabschnitts

$$F2* \ = \ Fm \ * \ \sin \ \alpha \qquad\qquad (7)$$

Die Kraft Fm hingegen ergibt sich nach Gleichung 8.

$$Fm \ = \ St \ * \ A3 \qquad\qquad (8)$$

Selbstverständlich lassen sich die Gleichungen 7 und 8 auch auf den Fall der Figur 2 anwenden, wobei der Einleitungswinkels $\alpha$ einen Wert von 90° im Gradmaß aufweist.

Die Geometrie des Verschlusselements 6 unterstützt das Halten der gezeigten Schließstellung dadurch, dass die in Zustellrichtung 10 wirkende Kraft F1 größer ist als die entgegen der Zustellrichtung 10 wirkende Kraft F2*. Mit den Gleichungen 2, 7 und 8 ergeben sich die Ungleichungen 9.1 bis 9.3.

$$p1 \ * \ A2 \ > \ St \ * \ A3 \ * \ \sin \ \alpha \qquad\qquad (9.1)$$

$$p1 \ * \ A2 \ > \ ( \ (p1 \ * \ r) \ / \ y3 \ ) \ * \ A3 \ * \ \sin \ \alpha \qquad (9.2)$$

$$A2 \ / \ (A3 \ * \ \sin \ \alpha) \ > \ r \ / \ y3 \qquad\qquad (9.3)$$

Gemäß Ungleichung 9.3 ist ein erstes Verhältnis der hydraulisch in Zustellrichtung 10 wirksamen Fläche A2 zu der hydraulisch entgegen der Zustellrichtung 10 wirksamen Fläche (A3 * sin $\alpha$) des Membranabschnitts 16 größer als ein zweites Verhältnis des mittleren Krümmungsradius r des Membranabschnitts 16 zu der Wanddicke y3 des Membranabschnitts 16. Hierdurch wird sichergestellt, dass der Druck p1 das Verschließen des Verschlusselement 6 in der Schließposition in Richtung des Ventilsitzes 8 unterstützt.

Eine hydraulisch entgegen der Zustellrichtung 10 wirksame Kreisringfläche A4, die sich durch ein Anliegen des Membranabschnitts 16 an dem Anlagebereich 28 ergibt, erzeugt eine Kraft F3, die wie die Kraft F2* entgegen der Zustellrichtung 10 orientiert ist. Die Kreisringfläche A4 ergibt sich nach Gleichung 10 und die Kraftkomponente F3 ergibt sich nach Gleichung 11.

$$A4 \ = \ PI \ * \ ( \ (x3)^2 \ - \ (x2)^2 \ ) \ / \ 4 \qquad\qquad (10)$$

$$F3 \ = \ p1 \ * \ A4 \qquad\qquad (11)$$

Die Geometrie des Verschlusselements 6 unterstützt das Halten der gezeigten Schließstellung dadurch, dass die in Zustellrichtung 10 wirkende Kraft F1 größer ist als die entgegen der Zustellrichtung 10 wirkenden Kräfte F2* und F3. Mit den Gleichungen 2, 7, 10 und 1 ergeben sich die Ungleichungen 12.1 bis 12.8.

$$F1 > F2* + F3$$

$$p1 * A2 > (St * A3 * \sin \alpha) + p1 * A4 \qquad (12.1)$$

$$p1 * A2 > ( (p1 * r) / y3 ) * A3 * \sin \alpha + ( p1 * A4 ) \qquad (12.2)$$

$$A2 > ( r / y3 ) * A3 * \sin \alpha + A4 \qquad (12.3)$$

$$A2 / (A3*A4) > ( ( r / y3 ) * \sin \alpha ) / A4 + (1/A3) \qquad (12.4)$$

$$A2 / (A3*A4) - (1/A3) > ( ( r / y3 ) * \sin \alpha ) / A4 \qquad (12.5)$$

$$(A2*A4) / ( (A3*A4) - (A4/A3) > r / y3 ) * \sin \alpha \qquad (12.6)$$

$$(A2 - A4) / A3 > ( r / y3 ) * \sin \alpha \qquad (12.7)$$

$$(A2 - A4) / ( A3 * \sin \alpha ) > ( r / y3 ) \qquad (12.8)$$

Gemäß Ungleichung 12.8 ist ein erstes Verhältnis der hydraulisch in Zustellrichtung 10 wirksamen Fläche A2 abzüglich der hydraulisch entgegen der Zustellrichtung 10 wirksamen Fläche A4 zu der hydraulisch entgegen der Zustellrichtung 10 wirksamen Fläche (A3 * sin α) des Membranabschnitts 16 größer als ein zweites Verhältnis des mittleren Krümmungsradius r des Membranabschnitts 16 zu der Wanddicke y3 des Membranabschnitts 16. Hierdurch wird sichergestellt, dass der Druck p1 das Verschließen des Verschlusselement 6 in der Schließposition in Richtung des Ventilsitzes 8 unterstützt.

Eine Kreisringfläche A5 bezüglich des Membranabschnitts 16 ergibt sich nach Gleichung 13. Anstelle des Durchmessers x2 kann auch der Durchmesser x3 verwendet werden, soweit es sich um eine unterstützten Membran-

abschnitt 16 handelt.

$$A5 = PI * ( (x1)^2 - (x2)^2 ) / 4 \hspace{3cm} (13)$$

Ein drittes Verhältnis einer hydraulisch in Richtung des Schließabschnitts 24 wirksamen Fläche A2 zu einer hydraulisch in Gegenrichtung des Schließabschnitts 24 projizierten Fläche A5 des Membranabschnitts 16 entspricht gemäß Gleichung 14 einem Faktor f, der zwischen 0,2 und 0,6 liegt. Bevorzugt liegt der Faktor f in einem Bereich zwischen 0,4 und 0,6. Dadurch wird eine Geometrie des Verschlusselements 6 erreicht, die das Schließen und den Schließzustand des Ventilelements 2 unterstützt.

$$A2 \ / \ A5 = f \hspace{4cm} (14)$$

Bei einem hohen Rückdruck p2 aus dem Abflussabschnitt 14 würde die von dem Ventilantrieb in Zustellrichtung 10 aufzubringende Kraft zum Schließen der Ventileinrichtung 2 steigen. Dieser Anstieg der notwendigen Schließkraft kann durch eine modulare Anpassung der Druckfeder 10 und/oder einer Druckfeder in dem Ventilantrieb kompensiert werden, womit das gewünschte Kraftfenster zum Betrieb des Ventilantriebs verschoben wird.

**Patentansprüche**

1. Ein Verschlusselement (6) für eine Ventileinrichtung (2), wobei das Verschlusselement (6) einen zwischen einem Schließabschnitt (24) und einen Membranabschnitt (16) verlaufenden Zwischenabschnitt (32) umfasst und in einem Zuflussabschnitt (12) der Ventileinrichtung (2) anordenbar ist, wobei ein erstes Verhältnis einer hydraulisch in Richtung des Schließabschnitts (24) wirksamen Fläche (A2) zu einer hydraulisch in Gegenrichtung des Schließabschnitts (24) wirksamen Schnittfläche (A1; A3) des Membranabschnitts (16) größer ist als ein zweites Verhältnis eines mittleren Krümmungsradius (r) des Membranabschnitts (16) in einer Schließposition des Verschlusselements (6) zu einer Wanddicke (y3) des Membranabschnitts (16), **dadurch gekennzeichnet, dass** ein Verhältnis einer hydraulisch in Richtung des Schließabschnitts (24) wirksamen Fläche (A2) zu einer hydraulisch in Gegenrichtung des Schließabschnitts (24) projizierten Fläche (A5) des Membranabschnitts (16) zwischen 0,2 und 0,6 liegt.

2. Das Verschlusselement (6) nach Anspruch 1, wobei der Zwischenabschnitt (32) die hydraulisch in Richtung des Schließabschnitts (24) wirksamen Fläche (A2) umfasst, und wobei sich der Zwischenabschnitt (32) entgegen der Zustellrichtung (10) verjüngt.

3. Das Verschlusselement (6) nach Anspruch 1 oder 2, wobei die hydraulisch in Gegenrichtung des Schließabschnitts (24) wirksame Schnittfläche (A1) des Membranabschnitts (16) an einer Grenze zwischen dem Zwischenabschnitt (32) und dem Membranabschnitt (16) angeordnet ist.

4. Das Verschlusselement (6) nach Anspruch 1 oder 2, wobei die hydraulisch in Gegenrichtung des Schließabschnitts (24) wirksame Schnittfläche (A3) des Membranabschnitts (16) innerhalb des Membranabschnitts (16) liegt und in einem Querschnitt in einer Lotebene (38) des Verlaufs des Membranabschnitts (18) verläuft, und wobei die Lotebene (38) im Bereich eines Endes eines inneren Anlageabschnitt (28) einer Antriebsstange (26) verläuft.

5. Das Verschlusselement (6) nach einem der vorstehenden Ansprüche, wobei die dem Medium zugerichtet Seite des Verschlusselements (6) eine im Wesentlichen stetige Oberfläche aufweist.

6. Das Verschlusselement (6) nach einem der vorstehenden Ansprüche, wobei das Verschlusselement (6) einstückig ausgeführt ist.

7. Das Verschlusselement (6) nach einem der vorstehenden Ansprüche, wobei das Verschlusselement (6) in nicht druckbelastetem Zustand und/oder nicht zugbelastetem Zustand im Wesentlichen die Schließposition einnimmt.

8. Das Verschlusselement (6) nach einem der vorstehenden Ansprüche, wobei das Verhältnis der hydraulisch in Richtung des Schließabschnitts (24) wirksamen Fläche (A2) zu der hydraulisch in Gegenrichtung des Schließabschnitts (24) projizierten Fläche (A5) des Membranabschnitts (16) zwischen 0,4 und 0,6 liegt.

**9.** Eine Ventileinrichtung (2) zur Absperrung und/oder Beeinflussung eines Durchflusses eines durch die Ventileinrichtung (2) strömenden Fluids umfassend ein Ventilelement (6) nach einem der vorstehenden Ansprüche.

**10.** Die Ventileinrichtung (6) nach dem vorstehenden Anspruch, wobei eine Druckfeder (30) zwischen einem Ventilkörper (4) und einer Antriebsstange (26) zur Druckbeaufschlagung des Verschlusselements (6) in Zustellrichtung (10) angeordnet ist.

## Claims

**1.** A closure element (6) for a valve device (2), the closure element (6) comprising an intermediate portion (32), which extends between a closing portion (24) and a diaphragm portion (16), and being able to be arranged in an inflow portion (12) of the valve device (2), a first ratio, of an area (A2) which acts hydraulically in the direction of the closing portion (24) to a cross-sectional area (AI; A3) of the diaphragm portion (16) which acts hydraulically in the direction opposite from the closing portion (24), being higher than a second ratio, of a mean radius of curvature (r) of the diaphragm portion (16) when the closure element (6) is in a closed position to a wall-thickness (y3) of the diaphragm portion (16), **characterised in that** a ratio of an area (A2) which acts hydraulically in the direction of the closing portion (24) to an area (A5) of the diaphragm portion (16) which is projected hydraulically in the direction opposite from the closing portion (24) is between 0.2 and 0.6.

**2.** The closure element (6) according to claim 1, wherein the intermediate portion (32) comprises the area (A2) which acts hydraulically in the direction of the closing portion (24), and wherein the intermediate portion (32) tapers in the direction opposite from the closing direction (10).

**3.** The closure element (6) according to claim 1 or 2, wherein the cross-sectional area (A1) of the diaphragm portion (16) which acts hydraulically in the direction opposite from the closing portion (24) is located at a boundary between the intermediate portion (32) and the diaphragm portion (16).

**4.** The closure element (6) according to claim 1 or 2, wherein the cross-sectional area (A3) of the diaphragm portion (16) which acts hydraulically in the direction opposite from the closing portion (24) is situated within the diaphragm portion (16) and extends in a cross-section in a plane (38) normal to the shape of the diaphragm portion (18), and wherein the normal plane (38) extends in the region of an end of an inner contact-making position (28) of an actuating stem (26).

**5.** The closure element (6) according to one of the preceding claims, wherein that side of the closure element (6) which faces towards the medium has a substantially continuous surface.

**6.** The closure element (6) according to one of the preceding claims, wherein the closure element (6) is produced in one piece.

**7.** The closure element (6) according to one of the preceding claims, wherein, in a state where it is not loaded by pressure and/or is not loaded in traction, the closure element (6) occupies substantially the closed position.

**8.** The closure element (6) according to one of the preceding claims, wherein the ratio of the area (A2) which acts hydraulically in the direction of the closing portion (24) to the area (A5) of the diaphragm portion (16) which is projected hydraulically in the direction opposite from the closing portion (24) is between 0.4 und 0.6.

**9.** A valve device (2) for shutting off and/or controlling a through-flow of a fluid flowing through the valve device (2), comprising a valve element (6) according to one of the preceding claims.

**10.** The valve device (6) according to the preceding claim, wherein a compression spring (30) is arranged between a valve body (4) and an actuating stem (26) to apply pressure to the closure element (6) in the closing direction (10).

## Revendications

**1.** Elément de fermeture (6) d'un dispositif de soupape (2), l'élément de fermeture (6) comprenant un tronçon intermédiaire (32) s'étendant entre un tronçon de fermeture (24) et un tronçon de membrane (16) et pouvant être disposé dans un tronçon d'amenée (12) du dispositif de soupape (2), un premier rapport d'une surface (A2) active hydrauliquement dans la direction du tronçon de fermeture (24) à une surface de coupe (A1 ; A3) du tronçon de membrane (16)active hydrauliquement dans la direction opposée du tronçon de fermeture (24) étant plus grand qu'un deuxième rapport d'un rayon de courbure (r) moyen du tronçon de membrane (16) dans une position de fermeture de l'élément de fermeture (6) à une épaisseur de paroi (y3) du tronçon de membrane (16), **caractérisé en ce qu'**un rapport d'une surface (A2) active hydrauliquement dans la direction du tronçon de fermeture (24) à une surface (A5) projetée du tronçon de membrane (16)active hydrauliquement dans la direction opposée du tronçon de fermeture (24) est compris entre 0,2 et 0,6.

2. Elément de fermeture (6) selon la revendication 1, le tronçon intermédiaire (32) comprenant la surface (A2) active hydrauliquement dans la direction du tronçon de fermeture (24), et le tronçon intermédiaire (32) se rétrécissant à l'opposé de la direction d'avance (10).

3. Elément de fermeture (6) selon la revendication 1 ou 2, la surface de coupe (A1) du tronçon de membrane (16)active hydrauliquement dans la direction opposée du tronçon de fermeture (24) étant disposée à une limite entre le tronçon intermédiaire (32) et le tronçon de membrane (16).

4. Elément de fermeture (6) selon la revendication 1 ou 2, la surface de coupe (A3) du tronçon de membrane (16)active hydrauliquement dans la direction opposée du tronçon de fermeture (24) étant située à l'intérieur du tronçon de membrane (16) et s'étendant, dans unesection transversale, dans un plan vertical (38) du tracé du tronçon de membrane (18), et le plan vertical (38) s'étendant dans la zone d'une extrémité d'un tronçon d'appui (28) intérieur d'une tige d'entraînement (26).

5. Elément de fermeture (6) selon l'une des revendications précédentes, le côté de l'élément de fermeture (6) dirigé vers le fluide présentant une surface essentiellement continue.

6. Elément de fermeture (6) selon l'une des revendications précédentes,l'élément de fermeture (6) étant réalisé d'une seule pièce.

7. Elément de fermeture (6) selon l'une des revendications précédentes,l'élément de fermeture (6) adoptant essentiellement la position de fermeture dans l'état non chargé en pression et/ou dans l'état non chargé en traction.

8. Elément de fermeture (6) selon l'une des revendications précédentes, le rapport de la surface (A2) active hydrauliquement dans la direction du tronçon de fermeture (24) à la surface (A5) projetée du tronçon de membrane (16)active hydrauliquement dans la direction opposée du tronçon de fermeture (24)étant compris entre 0,4 et 0,6.

9. Dispositif de soupape (2) destiné à bloquer et/ou à influencer un débit d'un fluide s'écoulant à travers le dispositif de soupape (2), comprenant un élément de fermeture (6)selon l'une des revendications précédentes.

10. Dispositif de soupape (6)selon la revendication précédente, un ressort de pression (30) étant disposé entre un corps de soupape (4) et une tige d'entraînement (26)pour l'alimentation en pression de l'élément de fermeture (6) dans la direction d'avance (10).

Figur 1

Figur 2

EP 3 070 381 B1

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012211926 A1
- DE 102013215294
- DE 8709978 U1
- DE 3327589 A1
- EP 1596109 A1